(19) Europäisches Patentamt / European Patent Office / Office européen des brevets

(11) **EP 3 352 138 A1**

(12) **EUROPEAN PATENT APPLICATION**

(43) Date of publication:
**25.07.2018 Bulletin 2018/30**

(51) Int Cl.:
***G06T 15/60*** *(2006.01)*       ***G06T 19/00*** *(2011.01)*

(21) Application number: **18151835.8**

(22) Date of filing: **16.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **24.01.2017 EP 17305074**

(71) Applicant: **THOMSON LICENSING**
**92130 Issy les Moulineaux (FR)**

(72) Inventors:
• **ROBERT, PHILIPPE**
**35576 CESSON SEVIGNE CEDEX (FR)**
• **JIDDI, SALMA**
**35576 CESSON SEVIGNE CEDEX (FR)**
• **LAURENT, ANTHONY**
**35576 CESSON SEVIGNE CEDEX (FR)**

(74) Representative: **Merlet, Hugues**
**TECHNICOLOR**
**1-5, rue Jeanne d'Arc**
**92130 Issy-les-Moulineaux (FR)**

(54) **METHOD AND APPARATUS FOR PROCESSING A 3D SCENE**

(57)     A method for processing a 3D scene and a corresponding apparatus are disclosed. A 3D position of at least one point light source of the 3D scene is determined (10) from information representative of 3D geometry of the scene. Then, an occlusion attenuation coefficient assigned to said at least one point light source is calculated (11) from an occluded area and an unoccluded area, said occluded area and said unoccluded area only differing in that said at least one point light source is occluded by an object in said occluded area and said at least one point light source is not occluded in said unoccluded area,. Color intensity of at least one pixel of the 3D scene can thus be modified (12) using at least said occlusion attenuation coefficient.

FIG. 1

**Description**

Technical field

The present disclosure relates to 3D scene lighting for mixed reality. More particularly, the present disclosure relates to virtual object lighting inserted into a 3D real scene.

Background

In mixed reality, that is when virtual objects are inserted into a 3D model of a real scene, 3D lighting of the virtual objects is a key feature in order to provide a realistic aspect of the 3D scene. The virtual objects should be lighted correctly by imitating the real lighting of the scene. But lighting is a time-consuming task in real-time rendering and need to be drastically simplified particularly when the 3D scene is rendered on a mobile device. Therefore, a compromise must be found between complex modeling and graphics rendering speed.

An important aspect in lighting a virtual object is the quality of rendering the shadows cast by the virtual object onto the real scene.

Shadows are important visual cues as they retain valuable information about the location, size and shape of the light sources present in a real scene. The estimation of an environment lighting is a crucial step towards photo-realistic rendering in Mixed Reality applications.

In Arief et al. "Realtime Estimation of Illumination Direction for Augmented Reality on Mobile Devices", CIC 2012, the 3D position of only the strongest direct lighting is estimated using an RGB image of the scene. A 3D marker with known geometry, such as a cube with simple geometry, is used to determine the illumination direction by analyzing the shadow of the 3D marker. However, with this method, the direction of a single dominant light source is estimated and the method requires cast shadows with distinct contours in the scene.

Related methods generally consider distant lighting, and neglect the effect of the 3D position of the source light, especially in indoor environments. Furthermore, even when the 3D position is considered, the lighting is generally reduced to a single point light.

Therefore, there is a need for a fast method that can model more complex indoor scene light sources (e.g. spot lights and area lights).

Summary

According to an aspect of the present disclosure, a method for processing a 3D scene is disclosed. Such a method comprises:

- determining a 3D position of at least one point light source of the 3D scene from information representative of 3D geometry of the scene;
- calculating an occlusion attenuation coefficient assigned to said at least one point light source from an occluded area and an unoccluded area, said occluded area and said unoccluded area only differing in that said at least one point light source is occluded by an object in said occluded area and said at least one point light source is not occluded in said unoccluded area,
- modifying a color intensity of at least one pixel of the 3D scene using at least said occlusion attenuation coefficient.

According to the present disclosure, it is thus possible to model the 3D lighting of a 3D scene for processing the 3D scene, for instance for rendering cast shadow of a virtual object inserted into the 3D scene or for recovering a diffuse map of the 3D scene in which shadows effects have been removed, as if the 3D scene was lit by only ambient lighting.

According to the present disclosure, an occlusion attenuation coefficient for the point light source is calculated using an area wherein an object occludes the point light source and an area wherein the point light source is not occluded by any object. The occluded area and the unoccluded area only differ from the lighting by the point light source. In other words, the occluded area and the unoccluded area are under the same lighting conditions, i.e. they are lit by the same point light sources except for the point light source for which the occlusion attenuation coefficient is being calculated, and both occluded and unocludded areas have a same reflectance property.

According to an embodiment of the present disclosure, for determining more than one point light source, determining a 3D position of a point light source and calculating an occlusion attenuation coefficient assigned to said point light source are iterated for each point light source to determine, wherein determining a 3D position of a point light source further comprises discarding pixels matched when determining a 3D position of previous estimated point light sources.

According to this embodiment, multiple point light sources are determined using only the remaining pixels that were not matched with previous determination of point light sources. Thus, the process for determining multiple point light sources is faster.

Futhermore, this embodiment allows to model lighting with multiple point lights source, therefore yielding more realistic effects when rendering cast shadows of virtual objects inserted into the 3D scene of a real scene.

According to another embodiment of the present disclosure, determining a 3D position of a point light source and calculating an occlusion attenuation coefficient assigned to said point light source are iterated until a number of maximum point lights is reached or until a number of remaining shadow pixels is below a predetermined threshold. Therefore, trade-off between rendering quality and complexity of processing the 3D scene can be adapted.

According to another embodiment of the present disclosure, calculating an occlusion attenuation coefficient assigned to a point light source comprises:

- identifying pairs of pixels comprising a first and a second pixels having a same reflectance property, wherein said first pixel of the pair is located in said not occluded area and wherein said second pixel of the pair is located in said occluded area,
- computing said occlusion attenuation coefficient by dividing a mean intensity computed for identified pixels from said occluded area by a mean intensity computed for corresponding pixels from said not occluded area.

According to this embodiment, quality of 3D rendering is improved as the calculated occlusion attenuation coefficient provides realistic cast shadows of virtual objects. According to a variant, diffuse map can be obtained more precisely using the calculated occlusion attenuation coefficient.

According to another embodiment of the present disclosure, said means intensity are weighted by a dissimilarity cost. According to this embodiment, it is possible to take into account the variable confidence in the similarity of the pairs of pixels when computing the occlusion attenuation coefficient.

According to another embodiment of the present disclosure, a predefined set of points light 3D positions is considered for determining 3D position of point light sources. According to this embodiment, the whole set can be scanned to identify the best location. Therefore, computing time is reduced. Furthermore, such a set of point lights 3D positions can be a list or structures as a tree for further refinement of the 3D positions of the point lights.

Such an embodiment allows providing a faster method for determining 3D position of point lights.

According to another embodiment of the present disclosure, determining a 3D position of at least one point light source of the 3D scene from information representative of 3D geometry of the scene comprises matching cast shadows from a rendered image obtained with said at least one point light source and cast shadows obtained from an image of the 3D scene. According to this embodiment, the 3D position of one or more than one multiple point lights can be determined in a fast way. According to this embodiment, more complex indoor scene light sources (e.g. spot lights and area lights) can be modeled.

According to another embodiment of the present disclosure, a virtual object being inserted into said 3D scene, modifying a color intensity of at least one pixel of the 3D scene using at least said occlusion attenuation coefficient comprises:

- computing a scaling factor at least by summing the occlusion attenuation coefficients assigned to each point light source of the 3D scene occluded by said virtual object,
- multiplying said color intensity of said at least one pixel by said scaling factor.

According to this embodiment, it is possible to render the cast shadow of a virtual object inserted in the 3D scene in a realistic way.

According to another embodiment of the present disclosure, modifying a color intensity of at least one pixel of the 3D scene using at least said occlusion attenuation coefficient comprises:

- computing a scaling factor at least by summing the occlusion attenuation coefficients assigned to each point light source of the 3D scene occluded at said at least one pixel,
- multiplying said color intensity of said at least one pixel by an inverse of said scaling factor.

According to this embodiment, it is possible to recover a diffuse map of the scene by removing the shadow effects in the scene.

According to another aspect of the present disclosure, an apparatus for processing a 3D scene is disclosed. Such an apparatus comprises:

- means for determining a 3D position of at least one point light source of the 3D scene from information representative of 3D geometry of the scene;

- means for calculating an occlusion attenuation coefficient assigned to said at least one point light source from an occluded area and an unoccluded area, said occluded area and said unoccluded area only differing in that said at least one point light source is occluded by an object in said occluded area and said at least one point light source is not occluded in said unoccluded area,
- means for modifying a color intensity of at least one pixel of the 3D scene using at least said occlusion attenuation coefficient.

According to a further aspect of the present disclosure, an apparatus for processing a 3D scene is disclosed. Such an apparatus comprises a memory associated with one or more processors configured to:

- determine a 3D position of at least one point light source of the 3D scene from information representative of 3D geometry of the scene;
- calculate an occlusion attenuation coefficient assigned to said at least one point light source from an occluded area and an unoccluded area, said occluded area and said unoccluded area only differing in that said at least one point light source is occluded by an object in said occluded area and said at least one point light source is not occluded in said unoccluded area,
- modify a color intensity of at least one pixel of the 3D scene using at least said occlusion attenuation coefficient.

According to another aspect of the present disclosure, a computer readable storage medium having stored thereon instructions for processing a 3D scene according to any one of the embodiments described in the disclosure is disclosed.

According to one implementation, the different steps of the method for processing a 3D scene as described here above are implemented by one or more software programs or software module programs comprising software instructions intended for execution by a data processor of an apparatus for processing a 3D scene, these software instructions being designed to command the execution of the different steps of the methods according to the present principles.

A computer program is also disclosed that is capable of being executed by a computer or by a data processor, this program comprising instructions to command the execution of the steps of a method for processing a 3D scene as mentioned here above.

This program can use any programming language whatsoever and be in the form of source code, object code or intermediate code between source code and object code, such as in a partially compiled form or any other desirable form whatsoever.

The information carrier can be any entity or apparatus whatsoever capable of storing the program. For example, the carrier can comprise a storage means such as a ROM, for example a CD ROM or a microelectronic circuit ROM or again a magnetic recording means, for example a floppy disk or a hard disk drive.

Again, the information carrier can be a transmissible carrier such as an electrical or optical signal that can be conveyed via an electrical or optical cable, by radio or by other means. The program according to the present principles can be especially uploaded to an Internet type network.

As an alternative, the information carrier can be an integrated circuit into which the program is incorporated, the circuit being adapted to executing or to being used in the execution of the methods in question.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more sub-programs of a program or more generally to any element of a program or a piece of software capable of implementing a function or a set of functions as described here below for the module concerned. Such a software component is executed by a data processor of a physical entity (terminal, server, etc) and is capable of accessing hardware resources of this physical entity (memories, recording media, communications buses, input/output electronic boards, user interfaces, etc).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

Brief description of the drawings

Figure 1 illustrates an exemplary method for processing a 3D scene according to an embodiment of the present disclosure,

Figure 2 illustrates an exemplary method for determining 3D position of candidates point light sources of the 3D scene according to an embodiment of the present disclosure,

Figure 3A illustrates an image of a 3D scene,

Figure 3B illustrates cast shadows of objects in the 3D scene from the image illustrated by figure 3A,

Figure 3C illustrates an image of the 3D scene rendered with a point light source,

Figure 3D illustrates another image of the 3D scene rendered with another point light source,

Figure 3E illustrates matched and unmatched pixels of cast shadows rendered by a candidate point light source, with pixels of cast shadows illustrated by figure 3B,

Figure 4 illustrates an exemplary method for calculating an occlusion attenuation coefficient for a point light source according to an embodiment of the present disclosure,

Figure 5A illustrates an exemplary method for modifying pixels color intensity according to an embodiment of the present disclosure,

Figure 5B illustrates an exemplary method for modifying pixels color intensity according to another embodiment of the present disclosure,

Figure 6 illustrates an exemplary apparatus for processing a 3D scene according to an embodiment of the present disclosure.

Description of embodiments

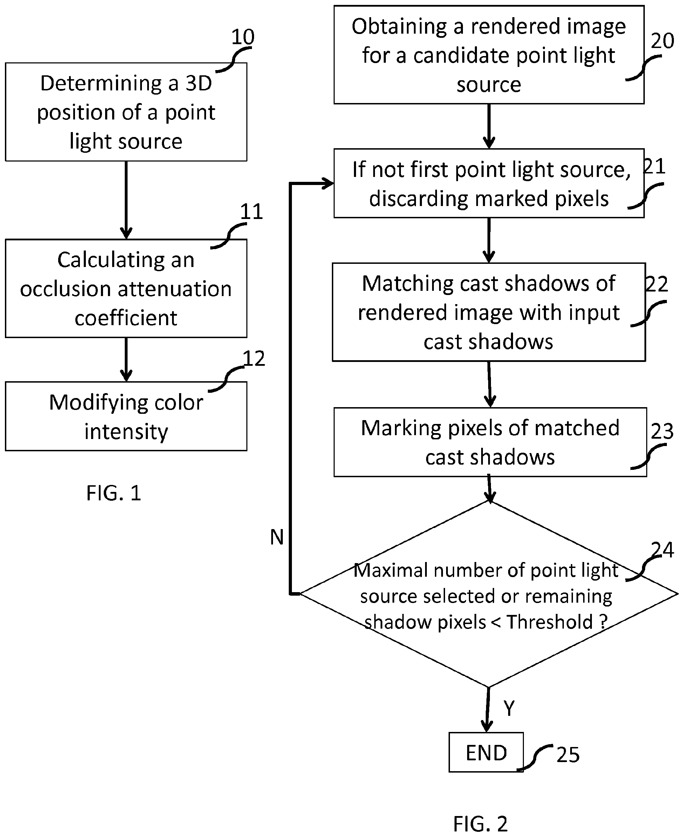

Figure 1 illustrates an exemplary method for processing a 3D scene according to an embodiment of the present disclosure.

According to the present disclosure, the 3D lighting of a 3D scene is modeled so as to allow processing of the 3D scene, for instance for inserting virtual objects in the 3D scene and obtaining a realistic rendering of the resulting 3D scene, or for recovering a diffuse map of the 3D scene. Any other processing of the 3D scene is thus possible, once the 3D lighting conditions and parameters of the 3D scene have been determined.

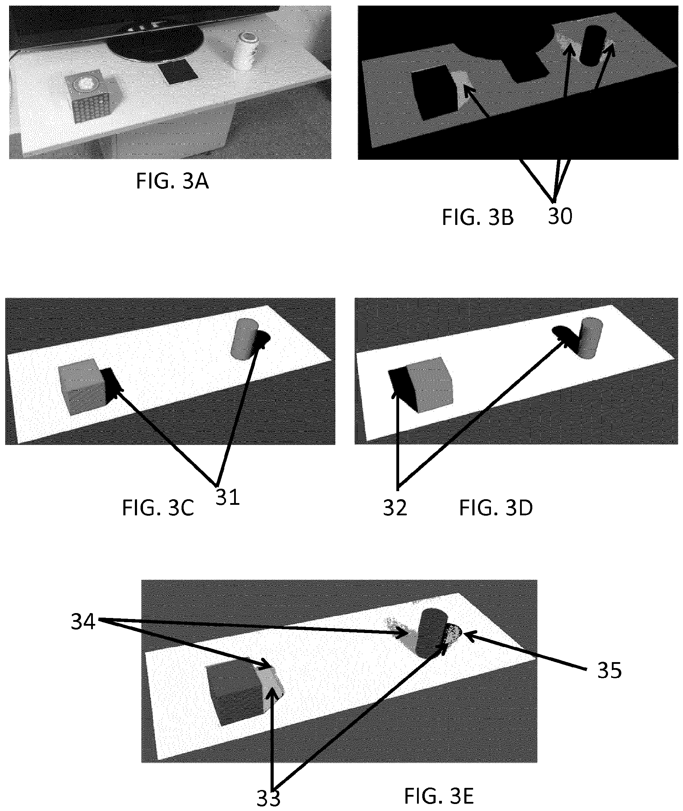

In step 10, 3D position of point light sources of the 3D scene are determined from at least information representative of 3D geometry of the scene. For instance, the location in the 3D scene of point light sources from a set of candidate point light sources is determined. Camera position and scene geometry are used for determining occlusion maps of the scene, and providing shadow candidates. Cast shadows are detected in an input RGB (Red Green Blue) image of the scene obtained for a particular viewpoint in the 3D scene. In a specific embodiment, the image is captured by a camera which is fixed with respect to the scene. The fixed camera may thus constinuously capture images of the scene. Figure 3A illustrates an example of an input RGB image. Figure 3B illustrates corresponding cast shadows detected in the input image. On figure 3B, detected cast shadows appear in light grey and are identified by the arrows pointing from the reference 30.

The shadow candidates are matched with the detected cast shadows and thus 3D position of a point light source is determined as the 3D location of the candidate point light source.

In step 11, an occlusion attenuation coefficient is calculated. Such a coefficient is assigned to a point light source for which location has been determined. The occlusion attenuation coefficient is calculated by comparing an area for which the point light source is occluded by an object and an area for which the point light source is not occluded by an object. Such occluded area and such not occluded area have a same reflectance property and are lit by the same other point lights.

In step 12, color intensity of pixels from the 3D scene are modified using at least the previously calculated occlusion attenuation coefficient.

Further details of steps 10, 11 and 12 are given below in reference to figures 2, 4, 5A and 5B.

Figure 2 illustrates an exemplary method for determining 3D position of candidates point light sources of the 3D scene according to an embodiment of the present disclosure. For instance, such a method could be used for carrying out step 10 from figure 1.

Inputs to this method are a mask of cast shadows detected in an input RGB image of the 3D scene and geometry of the 3D scene. A set of potential 3D point light sources is available. Such a set of 3D point light sources can be a list of 3D poses or a structured tree of 3D locations.

The identification of 3D point light sources is based on 3D rendering cast shadows from each 3D point light candidates and matching the resulting virtual shadows with the cast shadows detected in the input frame.

In step 20, a rendered image is obtained for each candidate point light source from the set of 3D point light sources. Such a rendered image may be obtained by any known method for 3D rendering cast shadows from the candidate point light source. Each rendered image comprises shadows cast by an associated candidate point light source from the set of point light sources.

Figures 3C and 3D illustrates examples of images rendered with different point light sources, and using a viewpoint in the 3D scene similar as the viewpoint used for obtaining the input RGB image. If the camera used to capture the RGB image is moving, the viewpoint is changing at each captured image and a new set of virtual shadows must be computed for each image. In the case where a fixed camera is used to capture the RGB image, lighting estimation is simplified since the set of virtual shadows does not need to be updated. Indeed, the set of virtual shadows is only calculated for the fixed viewpoint corresponding to the camera position. A moving video camera, e.g. a camera of a mobile device such as a tablet or a glass-type Head-Mounted Device, may be used in addition to the fixed camera in order to capture a video of the scene. A mixed reality application module may then transform the video using the light sources selected at step 23 with their associated parameters, e.g. occlusion attenuation, and display the transformed video on the screen of the mobile device. In a specific embodiment, the mixed reality application module is located in the mobile device.

It can be seen on figures 3C and 3D that cast shadows, respectively 31 and 32, depends on the location of the 3D point light source used to render the image. On figure 3C, the 3D point light source is located on the left of the projected scene, while on figure 3D, the 3D point light source is located on the right of the projected scene.

In step 22, each rendered image obtained at step 20 is matched with the mask of cast shadows detected in the input image. Matching a rendered image with the shadow mask is carried out via the computation of correlation between two binary variables: the binary mask of the detected shadows and the binary mask of the rendered shadows.

The correlation corresponds to the "phi coefficient" also called the "mean square contingency coefficient" given by the following formula:

$$\Phi = \frac{c_{11}c_{00} - c_{10}c_{01}}{\sqrt{c_{1x}c_{0x}c_{x0}c_{x1}}}$$

where $c_{11}$, $c_{10}$, $c_{01}$, $c_{00}$, are non-negative counts of number of observations that sum to the total number of observations:

- $c_{11}$ corresponds to pixels that are classified "shadow" in both binary masks,
- $c_{10}$ corresponds to pixels that are classified "shadow" in the shadow mask but not in the rendered mask,
- $c_{01}$ corresponds to pixels that are classified "shadow" in the rendered mask but not in the shadow mask and,
- $c_{00}$ corresponds to pixels that are classified "visible" in both masks.

The point light giving the maximal correlation value is selected.

Figure 3E depicts matched pixels (33) and unmatched pixels (34, 35) of cast shadows rendered by a candidate point light source. Matched pixels (33) are represented in light grey areas. Black pixels (35) correspond to unmatched rendered shadows, that is to pixels of shadows cast by the candidate point light source that do not match with the shadows detected in the input image. Medium grey pixels (34) corresponds to unmatched detected shadows, that is to pixels of shadows detected in the input image that do not match with the shadows cast by the candidate point light source.

In step 23, once a candidate point light is selected, matched pixels that match both the mask of detected shadows and the rendered shadows are marked so as to discard those pixels when estimating other point light source location.

When estimating multiple point lights, in step 21, the pixels that have been marked in determining previous point lights (light grey pixels 33 on figure 3E) are discarded.

In steps 22 and 23, determining of new additional point light position is based on the remaining pixels (medium grey pixels 34 on figure 3E). Remaining point light candidates are evaluated again through the correlation of the detected and rendered shadows.

In step 24, it is evaluated whether a number (if it exists) of maximal point lights is achieved. According to another variant, it is evaluated instead whether the number of remaining detected shadow pixels is below a threshold.

According to a further another variant, it is evaluated whether a number (if it exists) of maximal point lights is achieved or whether the number of remaining detected shadow pixels is below a threshold.

When the result of the evaluation at step 24 is positive (Y), steps 21-23 are iterated. When the result of the evaluation at step 24 is negative (N), the process ends at step 25.

A set of shadow pixels is linked to each point light source identified in step 10. The set of shadow pixels allows to define a characteristic of the light source that is called *occlusion attenuation.* This occlusion attenuation coefficient has an interest in mixed reality when, for example, a virtual object is inserted into a 3D scene. In this case, the virtual object should create a shadow rendered in the mixed image. The *occlusion attenuation* coefficient is described via a parameter $\beta_i$ attached to each light source $i$ identified in the 3D scene. The shadow is rendered by attenuating the color intensity of the pixels in the area that does not 'see' the current light source $i$. For example, in the case of occlusion of a unique light source $i$, the color of a pixel that does not see the light source $i$ is multiplied by $\beta_i$.

Modeling the shadowing via an *occlusion attenuation* is an approximation.

In case of diffuse surfaces, the reflection model can be approximated as follows:

$$I(p) = k_d \left( L_0 + \sum_{i=1}^{m} O_i(p) \left( \vec{N}(p).\vec{L}_i(p) \right) I_i \right) \qquad (1)$$

where $I(p)$ is the color intensity of pixel $p$, $k_d$ is its diffuse reflectance value, $L_0$ is the ambient lighting intensity, $I_i$ is the color intensity of point light $i$, with a total of $m$ point lights, $\vec{L}_i(p)$ is the 3D direction from 3D location corresponding to pixel $p$ to point light $i$, $\vec{N}(p)$ is the normal vector of the surface at the 3D point corresponding to pixel $p$ and $O_i(p)$ is a binary value that is equal to 1 if point light $i$ is visible from the 3D point corresponding to pixel $p$ and equal to 0 if occluded (that is point light $i$ is not visible from the 3D point corresponding to pixel $p$).

If the effect of the orientation of the surface is neglected with respect to the point light directions, the reflectance equation can be simplified as follows:

$$I(p) = k_d \left( L_0 + \sum_{i=1}^{m} O_i(p) L_i \right) \qquad (2)$$

This approximation is valid when for example the surface that is analyzed and on which shadows are cast is planar and the light is far enough so that $(\vec{N}(p).\vec{L}_i(p))$ is approximately constant and integrated in the term $L_i$ in equation (2).

$$\hat{L} = L_0 + \sum_{i=1}^{m} L_i \; .$$

The lighting intensity in the absence of lighting occlusion is noted

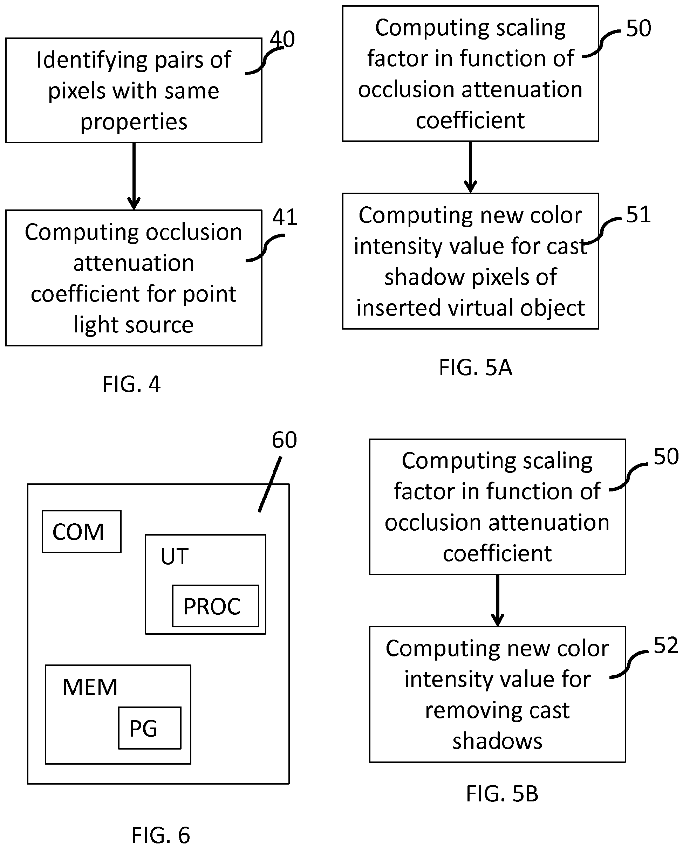

Figure 4 illustrates an exemplary method for calculating an occlusion attenuation coefficient $\beta_i$ for a point light $i$ according to an embodiment of the present disclosure.

In step 40, pairs of pixels (*p, p'*) with same reflectance properties are identified, where pixel *p'* is a pixel visible from all the point lights and pixel *p* is a pixel not visible from point light *i*. The identification of pairs of pixel (*p, p'*) is to identify pixels for which color intensity difference is only due to the occlusion of point light *i*. Such an identification of pairs of pixel (*p, p'*) allows to determine a reference unoccluded area that has the same intrinsic color characteristics as the occluded area and that only differs in lighting by the current point light *i*. That is the occluded area is not lit by *i*, while the reference unoccluded area is lit by *i*.

Thus, the reference unoccluded area and the occluded area are first identified using the mask of cast shadows input at step 10 from figure 1.

Pairs of pixels (*p, p'*) that have the same reflectance properties and that differ only with respect to visibility/occlusion of point light *i* are matched.

For each 'occluded' pixel *p*, each candidate pixel *q* of the 'visible' area (reference unoccluded area) is considered. Similarity features that express similar reflectance between *p* and *q* are evaluated. Several similarity features may be used to produce one value of similarity for the pair (*p, q*) or only one similarity feature may be used. For instance, similarity features used for matching pairs of pixels may correspond to chromaticity values, color intensity values,

Modified Specular Free (MSF) chromaticity value, coplanarity of normal vectors $\vec{N}(p)$ and $\vec{N}(q)$ at 3D points corresponding to pixels *p* and *q* (for example by excluding pixels *q* for which normal vector $\vec{N}(q)$ is too far from normal vector $\vec{N}(p)$ of pixel *p*, that is a pixel q is excluded if $(\vec{N}(p).\vec{N}(q)) < Th$, where *Th* is a predetermined threshold, depth of the 3D points in the scene, 2D pixel distance...

A similarity value for each pair of pixels (*p, q*) is computed from the similarity features by computing differences between similarity features at pixel *p* and similairty features at pixel *q*. Some features such as '2D pixel distance' or 'coplanarity' reduce the potential error introduced by neglecting the effect of the orientation of the surface (by using equation (2) instead of (1)).

Then, among all candidate pixels q in the 'visible' area, the most similar candidate *p'* with respect to pixel *p* is chosen.

In step 41, the *occlusion attenuation* $\beta_i$ resulting from the occlusion of the current point light *i* is computed.

The respective reflectance equations for each pixel of a pair (*p,p'*) are:

$$I(p') = k_d \times \hat{L} \qquad I(p) = k_d \times \left( \hat{L} - L_i \right) \qquad (3)$$

Then, considering a set of such pairs of pixels (*p, p'*), the *occlusion attenuation* $\beta_i$ resulting from the occlusion of the current point light *i* can be calculated as follows:

$$\beta_i = \frac{\sum_p I(p)}{\sum_{p'} I(p')} \qquad (4)$$

by dividing the mean intensity $\frac{\sum_p I(p)}{}$ of the occluded area by the mean intensity $\frac{\sum_{p'} I(p')}{}$ of the reference unoccluded area.

According to a variant, the occlusion attenuation coefficient $\beta_i$ can be computed by taking into account the similarity as a weight. According to this variant, equation (4) is thus modified as follows.

For each pixel **p** and its corresponding visible candidate **p'**, a dissimilarity weight is used when computing the mean intensity of the occluded area and the mean intensity of the reference unoccluded area.

Such a dissimilarity weight can be computed by $w_{p,p'} = e^{-(\sum_f \text{fcost}(f))}$, (5) where index *f* refers to a similarity feature and cos*t*(*f*) refers to the cost of dissimilarity between features attached to the points *p* and *p'*. The dissimilarity can be a quadratic difference for most of the features. For instance, for chromaticity, intensity, depth, it can be 2D square distance between pixels locations. For dissimilarity between 3D orientations, or other features, it can be computed by $(1 - (\vec{N}(p) . \overleftrightarrow{N}(q)))^2$.

The occlusion attenuation coefficient can thus be computed by:

$$\beta_i = \frac{\sum_p (I(p) \times \sum_{p'} W_{p,p'})}{\sum_p \sum_{p'} (W_{p,p'} \times I(p'))} \qquad (6)$$

Equation (6) is a variant to equation (4), with dissimilarity weights that allows to take into account the variable confidence in the similarity of the pairs of points (*p, p'*).

More generally, attenuation $\beta$ can be computed from a set of pixels *p* located in the shadow, via a solution that minimizes the following error function:

$$\min_\beta \left( \sum_p \sum_{q(p)} W_{p,q} . g(I(p) - \beta . I(q)) \right) \qquad (7)$$

Function **g**() can correspond for example to absolute or square value or any robust function. Points *p* and *q* belong respectively to shadow and lit areas. The estimation of $\beta$ can be carried out via classical minimization techniques.

According to the embodiment disclosed herein, when the scene comprises more than one point light, for identifying pairs of pixels that have the same reflectance properties and that differ only with respect to visibility/occlusion of point light *i*, the area 'occluded' by the current point light *i* is detected among the remaining 'active' pixels of the cast shadow mask, such remaining active pixels corresponding to shadow cast by the currently determined point light *i*. In other words, for detecting the area 'occluded' by the current point light *i,* the pixels marked in determining the previous point lights are discarded. Then, a set of corresponding pixels in the unoccluded area is identified and parameter $\beta_i$ is computed as disclosed in step 41. It is to be noted that in this way, only one parameter $\beta_i$ is computed per 'occluded' pixel.

According to another variant, when there is more than one point light, it could be taken into account that more than one point light can be occluded with respect to a given pixel. This could be considered when calculating the occlusion attenuation parameters $\beta_i$ as follows.

Let us consider a pixel *p* for which two point lights *i* and *j* are occluded. In this context, we can write :

$$I(p) = k_d \times \left( \hat{L} - L_i - L_j \right)$$

From equations (3) and (4), the occlusion attenuation parameter $\beta_{ij}(p)$ of pixel *p* ca be written as:

$$\beta_{ij}(p) = \frac{k_d \times \left(\hat{L} - L_i - L_j\right)}{k_d \times \hat{L}}$$

$$\beta_{ij}(p) = \frac{\hat{L} - L_i - L_j + \hat{L} - \hat{L}}{\hat{L}} = \beta_i(p) + \beta_j(p) - 1$$

That can be rewritten as:

Then, the processing can be the following: once all the light sources have been identified for instance as disclosed above in reference to figure 2, the corresponding 'occluded' areas are identified. According to this variant, a pixel p' can have more than one occluded pixel p. Then, for each pixel p of the occluded areas, a corresponding pixel p' in the unoccluded areas is identified. Then, a set of equations is built from the various pairs, such as for example:

$$I(p_1) = \beta_i \times I(p_1')$$

for a point $p_1$ for which light *i* is occluded,

$$I(p_2) = \beta_j \times I(p_2')$$

for a point $p_2$ for which light *j* is occluded,

$$I(p_3) = \left(\beta_i + \beta_j - 1\right) \times I(p_3')$$

$$I(p_4) = \left(\sum_n \beta_n + h - 1\right) \times I(p_4')$$

for a point $p_3$ for which both lights *i* and *j* are occluded, (8) for a point $p_4$ for which a set of *h* lights indexed by *n* are occluded.

Based on these linear equations, the occlusion attenuation parameters $\beta_i$ can be computed from a set of pairs of pixels. This set of pairs of pixels should be as large as possible for robust estimation.

As previously, weighting can also be used instead of selecting the best matching for each 'occluded' pixel in the unoccluded area. A weight is computed for each pair *(p,q)* according to equation (5) to quantify their degree of similarity. If the weight is small (below a threshold), it can be set to 0 to avoid noisy effect.

Then, in the case of multiple lights, the variant refers to equation (8) and consists in generalizing the error function (7) by considering a vector B of the set of attenuations $\beta i$ each one corresponding to a light source *i* :

$$\min{}_B \left(\sum_p \sum_{q(p)} W_{p,q} \cdot g\left(I(p) - \left(\sum_{i=1}^m \left(O_i(p).(\beta_i - 1)\right) + 1\right).I(q)\right)\right)$$

$O_i(p)$ is the binary value already defined. The same minimization techniques can be applied to estimate vector B.

Figure 5A illustrates an exemplary method for modifying pixels color intensity according to an embodiment of the present disclosure. According to the embodiment disclosed herein, occlusion attenuation is used in 3D rendering, when a virtual object is inserted, to create shadows cast by the virtual object onto real surfaces. Practically, each point light *i* is considered in the order of its previous detection, and corresponding attenuation $\beta_i$ is applied to the corresponding detected occluded area.

To render the virtual cast shadows, the occluded pixels for which point lights are occluded by the virtual object are identified together with their corresponding occluded point lights.

In step 50, for each occluded pixel p, a corresponding occlusion attenuation coefficient $\beta(p)$ is computed by

$$\beta(p) = \sum_{n=0}^h \beta_n - h + 1,$$

taking into account all the point lights occluded at pixel p. For instance, where *h* is the number of lights occluded at pixel $p$, and $\beta_n$ is the occlusion attenuation coefficient of point light $n$ computed according to any one of the variants disclosed above.

In step 51, the area of the real scene for which $h$ point lights are occluded can be modified by attenuating its color intensity via the following equation, for each pixel $p_{area}$ in the area:

$$\widehat{I}_{shadow}(p_{area}) = \beta(p_{area}) \times I(p_{area})$$

where $\widehat{I}_{shadow}(p_{area})$ is the new color intensity of each point of the area after occlusion attenuation.

It is to be noted that the identification of the point lights that are occluded by the virtual object with respect to a pixel excludes point lights that are already occluded by a real object at this pixel. Therefore, the virtual cast shadow at a given pixel only corresponds to the occlusion of point lights added by the virtual object at this pixel.

Figure 5B illustrates an exemplary method for modifying pixels color intensity according to another embodiment of the present disclosure. According to this embodiment, color intensity of pixels is modified for recovering a diffuse map of the 3D scene. A diffuse map of the 3D scene represents an image from the 3D scene wherein shadows effects have been removed. According to this embodiment, similarly as in the embodiment disclosed above, in step 50, for each occluded pixel $p$, a corresponding occlusion attenuation coefficient $\beta(p)$ is computed by taking into account all the point lights occluded at pixel $p$.

In step 52, the color intensity $I(p_{area})$ of each pixel in an occluded area is modified via the following equation:

$$\widehat{I}_{rec}(p_{area}) = \frac{I(p_{area})}{\beta(p_{area})}$$

where $\widehat{I}_{rec}(p_{area})$ is the new color intensity of the pixel after compensation of the occlusion attenuation, and

$$\beta(p_{area}) = \sum_{n=0}^{h} \beta_n - h + 1$$

where $h$ is the number of lights occluded at pixel $p$, and $\beta_n$ is the occlusion attenuation coefficient of point light $n$ computed according to any one of the variants disclosed above.

Figure 6 illustrates an exemplary apparatus 60 for processing a 3D scene according to an embodiment of the present disclosure. In the example shown in figure 6, the apparatus 60 comprises a processing unit UT equipped for example with a processor PROC and driven by a computer program PG stored in a memory MEM and implementing the method for processing a 3D scene according to the present principles.

The apparatus 60 is configured to:

- determine a 3D position of at least one point light source of the 3D scene from information representative of 3D geometry of the scene;
- calculate an occlusion attenuation coefficient assigned to said at least one point light source from an occluded area and an unoccluded area, said occluded area and said unoccluded area only differing in that said at least one point light source is occluded by an object in said occluded area and said at least one point light source is not occluded in said unoccluded area,,
- modify a color intensity of at least one pixel of the 3D scene using at least said occlusion attenuation coefficient.

At initialization, the code instructions of the computer program PG are for example loaded into a RAM (not shown) and then executed by the processor PROC of the processing unit UT. The processor PROC of the processing unit UT implements the steps of the method for processing a 3D scene which has been described here above, according to the instructions of the computer program PG.

## Claims

**1.** A method for processing a 3D scene comprising:

- determining (10) a 3D position of at least one point light source of the 3D scene from information representative of 3D geometry of the scene;
- calculating (11) an occlusion attenuation coefficient assigned to said at least one point light source from an occluded area and an unoccluded area, said occluded area and said unoccluded area differing in that said at least one point light source is occluded by an object in said occluded area and said at least one point light source is not occluded in said unoccluded area,
- modifying (12) a color intensity of at least one pixel of the 3D scene using at least said occlusion attenuation coefficient.

2. The method for processing a 3D scene according to claim 1, wherein for determining more than one point light source, determining a 3D position of a point light source and calculating an occlusion attenuation coefficient assigned to said point light source are iterated for each point light source to determine, wherein determining a 3D position of a point light source further comprises discarding pixels matched when determining a 3D position of previous estimated point light sources.

3. The method according to claim 2, wherein determining a 3D position of a point light source and calculating an occlusion attenuation coefficient assigned to said point light source are iterated until a number of maximum point lights is reached or until a number of remaining shadow pixels is below a predetermined threshold.

4. The method according to any one of claims 1 to 3, wherein calculating an occlusion attenuation coefficient assigned to a point light source comprises:

- identifying pairs of pixels comprising a first pixel and a second pixel having a same reflectance property, wherein said first pixel of the pair is located in said not occluded area and wherein said second pixel of the pair is located in said occluded area,
- computing said occlusion attenuation coefficient by dividing a mean intensity computed for identified pixels from said occluded area by a mean intensity computed for corresponding pixels from said not occluded area.

5. The method according to claim 4, wherein said mean intensity is weighted by a dissimilarity cost.

6. The method according to any one of claims 2 to 5, wherein a predefined set of points light 3D positions is considered for determining 3D position of point light sources.

7. The method according to any one of claims 1 to 6, wherein determining a 3D position of at least one point light source of the 3D scene from information representative of 3D geometry of the scene comprises matching cast shadows from a rendered image obtained with said at least one point light source and cast shadows obtained from an image of the 3D scene.

8. The method according to any one of claims 2 to 7, a virtual object being inserted into said 3D scene, modifying a color intensity of at least one pixel of the 3D scene using at least said occlusion attenuation coefficient comprises:

- computing a scaling factor at least by summing the occlusion attenuation coefficients assigned to each point light source of the 3D scene occluded by said virtual object,
- multiplying said color intensity of said at least one pixel by said scaling factor.

9. The method according to any one of claims 2 to 7, wherein modifying a color intensity of at least one pixel of the 3D scene using at least said occlusion attenuation coefficient comprises:

- computing a scaling factor at least by summing the occlusion attenuation coefficients assigned to each point light source of the 3D scene occluded at said at least one pixel,
- multiplying said color intensity of said at least one pixel by an inverse of said scaling factor.

10. An apparatus for processing a 3D scene comprising:

- means for determining a 3D position of at least one point light source of the 3D scene from information representative of 3D geometry of the scene;
- means for calculating an occlusion attenuation coefficient assigned to said at least one point light source from an occluded area and an unoccluded area, said occluded area and said unoccluded area differing in that said at least one point light source is occluded by an object in said occluded area and said at least one point light source is not occluded in said unoccluded area,

- means for modifying a color intensity of at least one pixel of the 3D scene using at least said occlusion attenuation coefficient.

11. A computer program comprising software code instructions for performing the method according to any one of claims 1 to 9, when the computer program is executed by a processor.

Determining a 3D
position of a point
light source    10

↓

Calculating an
occlusion attenuation
coefficient    11

↓

Modifying color
intensity    12

FIG. 1

Obtaining a rendered image
for a candidate point light
source    20

↓

If not first point light source,
discarding marked pixels    21

↓

Matching cast shadows of
rendered image with input
cast shadows    22

↓

Marking pixels of matched
cast shadows    23

↓

Maximal number of point light
source selected or remaining
shadow pixels < Threshold ?    24

N

Y

END    25

FIG. 2

FIG. 3A

FIG. 3B    30

FIG. 3C    31

32    FIG. 3D

34

35

33    FIG. 3E

Identifying pairs of pixels with same properties ⌇40

↓

Computing occlusion attenuation coefficient for point light source ⌇41

FIG. 4

Computing scaling factor in function of occlusion attenuation coefficient ⌇50

↓

Computing new color intensity value for cast shadow pixels of inserted virtual object ⌇51

FIG. 5A

60

COM

UT

PROC

MEM

PG

FIG. 6

Computing scaling factor in function of occlusion attenuation coefficient ⌇50

↓

Computing new color intensity value for removing cast shadows ⌇52

FIG. 5B

Europäisches
Patentamt

European
Patent Office

Office européen
des brevets

**EUROPEAN SEARCH REPORT**

Application Number

EP 18 15 1835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KATRIEN JACOBS ET AL: "Automatic generation of consistent shadows for augmented reality", GRAPHICS INTERFACE 2005 : PROCEEDINGS ; VICTORIA, BRITISH COLUMBIA, 9 - 11 MAY 2005, CANADIAN INFORMATION PROCESSING SOCIETY, 403 KING STREET WEST, SUITE 205 TORONTO, ONT. M5U 1LS CANADA, 7 May 2005 (2005-05-07), pages 113-120, XP058177119, ISSN: 0713-5424 ISBN: 978-1-56881-337-0 | 1,4,7, 10,11 | INV. G06T15/60 G06T19/00 |
| A | * abstract * * sections 1.2, 2.1, 2.2 * | 5 | |
| Y | BAS BOOM ET AL: "Point Light Source Estimation based on Scenes Recorded by a RGB-D camera", PROCEDINGS OF THE BRITISH MACHINE VISION CONFERENCE 2013, 2013, pages 105.1-105.11, XP055385177, DOI: 10.5244/C.27.105 ISBN: 978-1-901725-49-0 | 1,4,7, 10,11 | |
| A | * abstract * * page 2 * | 5 | TECHNICAL FIELDS SEARCHED (IPC) G06T |
| A | YANG WANG ET AL: "Estimation of multiple directional light sources for synthesis of mixed reality images", COMPUTER GRAPHICS AND APPLICATIONS, 2002. PROCEEDINGS. 10TH PACIFIC CO NFERENCE ON BEIJING, CHINA 9-11 OCT. 2002, LOS ALAMITOS, CA, USA,IEEE COMPUT. SOC, US, 9 October 2002 (2002-10-09), pages 38-47, XP010624887, DOI: 10.1109/PCCGA.2002.1167837 ISBN: 978-0-7695-1784-1 * abstract * | 1-11 | |

-----

-----

-/--

The present search report has been drawn up for all claims

| Place of search | Date of completion of the search | Examiner |
|---|---|---|
| Berlin | 12 April 2018 | Gao, Miao |

EPO FORM 1503 03.82 (P04C01)

page 1 of 2

| Europäisches Patentamt / European Patent Office / Office européen des brevets | **EUROPEAN SEARCH REPORT** | Application Number EP 18 15 1835 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Claus B Madsen ET AL: "A SCALABLE GPU-BASED APPROACH TO SHADING AND SHADOWING FOR PHOTOREALISTIC REAL-TIME AUGMENTED REALITY", , 2007, XP055466623, Retrieved from the Internet: URL:https://pdfs.semanticscholar.org/10ef/aa8f6a62ee2d45887ec60ada87c9252be595.pdf [retrieved on 2018-04-12] * abstract * ----- | 1-11 | |

TECHNICAL FIELDS SEARCHED (IPC)

The present search report has been drawn up for all claims

| Place of search | Date of completion of the search | Examiner |
|---|---|---|
| Berlin | 12 April 2018 | Gao, Miao |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 18 15 1835

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION**
**SHEET B**

The Search Division considers that the present European patent application does not comply with the requirements of unity of invention and relates to several inventions or groups of inventions, namely:

    1. claims: 1-4, 6-11

        Discarding matched pixels in the determination of light
        positions
                    ---

    2. claim: 5

        Weighting by a dissimilarity cost in the calculation of
        attenuation coefficients
                    ---

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ARIEF et al.** Realtime Estimation of Illumination Direction for Augmented Reality on Mobile Devices. CIC, 2012